# FASCICULE DE BREVET EUROPEEN

(11) **EP 2 865 062 B1**
(45) Date de publication et mention de la délivrance du brevet: **12.09.2018**
(21) Numéro de dépôt: 13730268.3
(22) Date de dépôt: 21.06.2013
(51) Int. Cl.: H02H 3/02, B64D 47/00

(54) **CIRCUIT ELECTRIQUE DE COUPURE D'UNE ALIMENTATION ELECTRIQUE A RELAIS ET FUSIBLES**
ELEKTRISCHE SCHALTUNG ZUM ABSCHALTEN EINER ELEKTRISCHEN STROMQUELLE MIT RELAIS UND SCHMELZSICHERUNGEN
ELECTRICAL CIRCUIT FOR CUTTING OFF AN ELECTRICAL SUPPLY WITH RELAY AND FUSES

(30) Priorité: 21.06.2012 FR 1255872
(43) Date de publication de la demande: 29.04.2015
(73) Titulaire: Safran Electronics & Defense, 92100 Boulogne-Billancourt (FR)
(72) Inventeur: VALETTE, Patrick, F-92100 Boulogne-Billancourt (FR); GUILLOT, François, F-92100 Boulogne-Billancourt (FR)
(74) Mandataire: Regimbeau
(86) Numéro de dépôt international: PCT/EP2013/063040
(87) Numéro de publication internationale: WO 2013/190109

(56) Documents cités:
- WO-A2-2008/113337
- FR-A1- 2 771 564
- US-A1- 2005 110 526

## Description

### DOMAINE TECHNIQUE GENERAL

L'invention concerne le domaine de la sécurité de la commande de systèmes ou d'équipements, notamment électroniques et notamment ceux embarqués à bord d'un aéronef.

### ETAT DE LA TECHNIQUE

Un système électrique peut être commandé après qu'une condition est vérifiée.

Une solution connue est de connecter l'alimentation du système électrique à un circuit électrique configuré pour tester des signaux discrets indiquant qu'une condition est vérifiée.

Par exemple, dans le cas d'un aéronef, certains équipements électriques doivent être coupés en vol, par exemple dans le cas d'un système d'acquisition, de traitement et de communication de données avioniques, le module radio de transmission sans fil doit être coupé pour ne pas perturber le fonctionnement de l'aéronef.

Au moyen de portes logiques ET (en anglais, « AND ») connectées à des interrupteurs il est possible simplement de couper l'alimentation du module radio si nécessaire.

Une telle solution n'est toutefois pas satisfaisante lorsque des niveaux de sécurité (en anglais, « *safety* ») particulièrement élevés sont requis. Par exemple, les niveaux de fiabilité requis pour l'alimentation des équipements électriques présentant un risque catastrophique sont de l'ordre de 10⁻⁹ par heure d'utilisation.

WO2008/113337, sur lequel le préambule est délimité, concerne un circuit électrique pour couper une alimentation électrique, recevant en entrée au moins deux signaux électriques discrets, et comprenant unités de coupure connectées en série l'une de l'autre entre la source de tension et l'équipement électrique.

### PRESENTATION DE L'INVENTION

L'invention propose de pallier au moins un de ces inconvénients.

A cet effet, l'invention propose un circuit électrique adapté pour couper une alimentation électrique d'un équipement électrique, ledit circuit électrique recevant en entrée au moins deux signaux électriques discrets xi, i=1, N, le circuit électrique comprenant :
- une source de tension ;
- un nombre N>1 unités Ui de coupure connectées, i=1, ..., N en série l'une de l'autre entre la source de tension et l'équipement électrique, une dernière unité U_{N} de coupure étant connectée à l'équipement électrique, chaque unité Ui de coupure présentant un état ouvert ou fermé en fonction d'un signal électrique de commande ;
les unités Uj, j=1, N-1 de coupure en amont de la dernière unité U_{N} de coupure étant chacune commandée par un signal électrique discret xj, j=1,..., N-1 distinct, la dernière unité de coupure étant commandée en fonction de l'état des unités de coupure Uj, j=1, .., N-1 en amont et un signal électrique discret x_{N} différent de celui commandant les unités Uj, j=1, N-1 de coupure en amont.

L'invention est avantageusement complétée par les caractéristiques suivantes, prises seules ou en une quelconque de leur combinaison techniquement possible :
- la dernière unité de coupure est commandée pour isoler l'équipement électrique dès lors que les unités de coupure en amont de la dernière unité de coupure présentent un état divergent ;
- la dernière unité de coupure est adaptée pour générer un court-circuit dès lors que ladite dernière unité de coupure est à l'état fermé ;
- la dernière unité de coupure est connectée à une ligne de masse pour générer le court-circuit ;
- il comprend au moins un fusible pour, en cas de court-circuit isoler la source de tension des éléments dudit circuit électrique ;
- chaque unité de coupure comprend une voie supérieure et une voie inférieure, chaque voie comprenant un interrupteur présentant un état « ouvert » ou un état « fermé » ;
- les voies supérieures des unités de coupure en amont de la dernière unité de coupure sont connectées de manière inversée ;
- les unités de coupure sont des relais électromécaniques ;
- la dernière unité de coupure est commandée par une fonction ET logique de l'état des unités de coupure en amont et par le signal de commande de la N^{ième} unité de coupure.

Et l'invention concerne également un système d'acquisition, de traitement et de communication de données avioniques comprenant un module radio comprenant une alimentation électrique connectée à un circuit électrique selon l'invention.

Le circuit de l'invention comportant plusieurs composants le niveau de sécurité du circuit est de l'ordre de 10⁻⁹ par heure d'utilisation. En outre, en utilisant plusieurs étages qui peuvent interagir en fonction de leur état on s'assure que le circuit est robuste aux pannes qui peuvent affecter les composants tout en permettant d'alimenter l'équipement électrique seulement dans les cas où il doit l'être.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un système d'acquisition, de traitement et de communication de données avioniques conformes à un mode de réalisation de l'invention ;
- la figure 2 illustre un schéma de principe d'un circuit électrique conforme à un mode de réalisation de l'invention,
- la figure 3 illustre un schéma d'un circuit électrique conforme à un mode de réalisation de l'invention.

Sur l'ensemble des figures, les éléments similaires portent des références identiques.

### DESCRIPTION DETAILLEE DE L'INVENTION

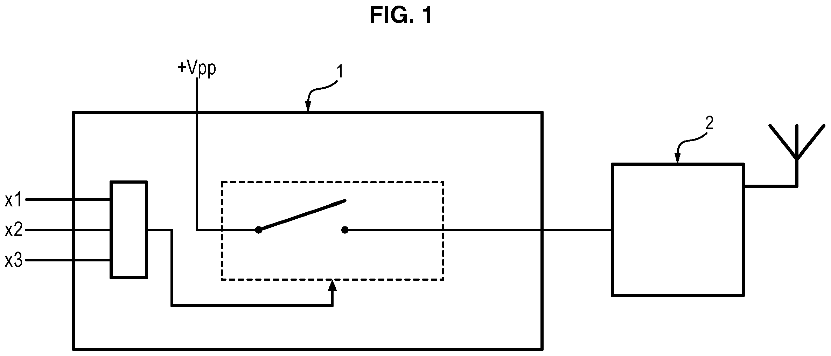

En relation avec la figure 1, un système d'acquisition, de traitement et de communication de données avioniques comprend :
- une unité d'acquisition (non représentée) de signaux électriques discrets x1, x2, x3 indiquant un état de l'aéronef ;
- un module 2 radio adapté pour transférer les données avioniques du système vers une station distante ;
- une source de tension +Vpp d'alimentation du module 2 radio, et
- un circuit 1 électrique d'alimentation électrique du module 2 radio qui permet de couper l'alimentation du module radio lorsque l'aéronef est en vol.

Un état de l'aéronef est par exemple, en vol, au sol, etc. Lorsque l'aéronef est au sol des signaux électriques discrets indiquant que l'aéronef a atterri sont par exemple : un signal indiquant l'existence d'un poids de l'aéronef sur les roues, ou bien un signal indiquant que les portes de l'aéronef sont ouvertes.

Le circuit électrique d'alimentation peut être modélisé par un interrupteur commandé par une fonction logique des signaux électriques discrets (voir la figure 1).

On précise que l'on entend par fonction logique une série d'opérations logiques à une ou plusieurs variables. Des fonctions logiques connues sont : ET (en anglais, « AND »), OU (en anglais, « OR »), OU exclusif (en anglais, « XOR »), etc.

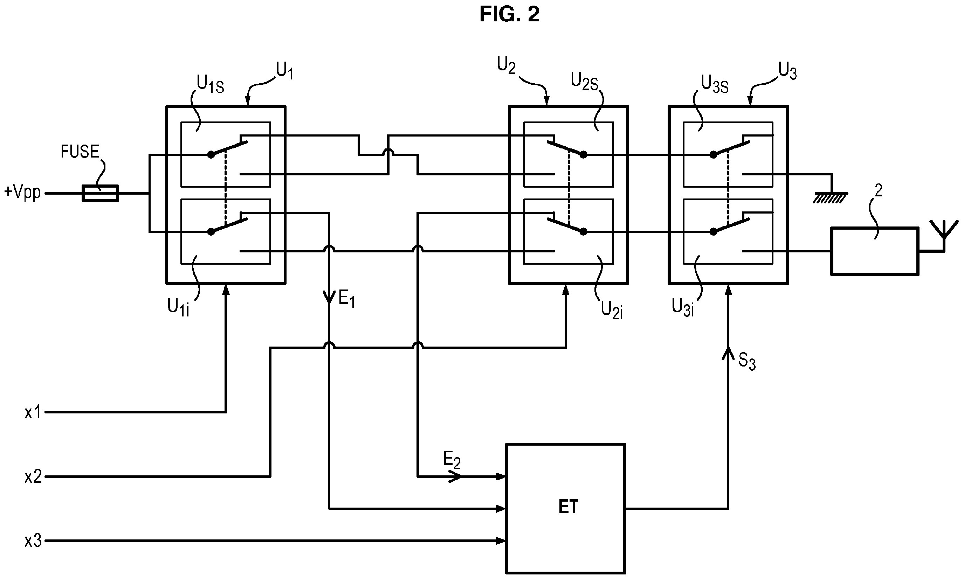

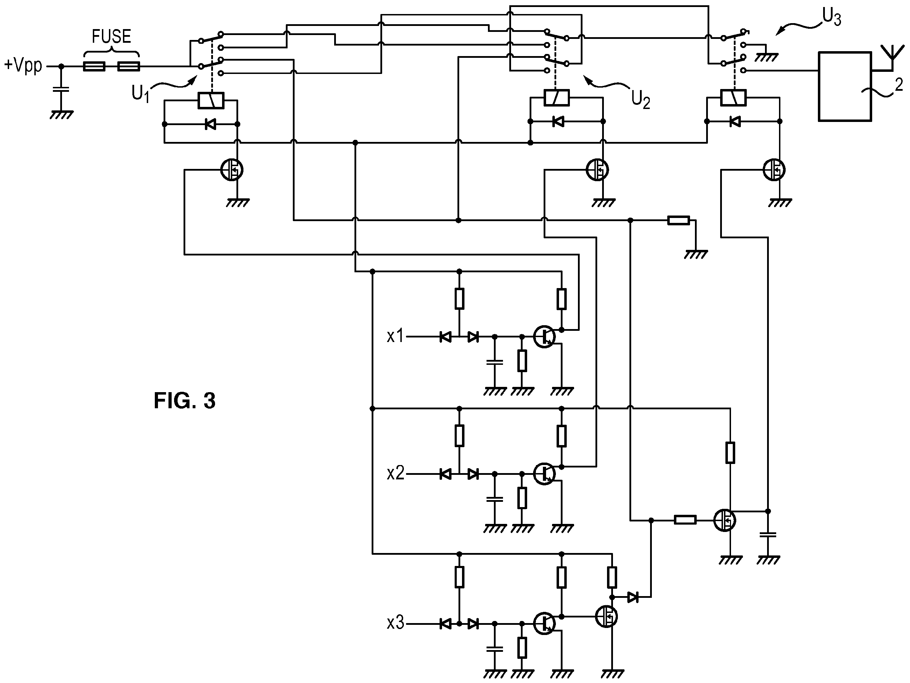

En relation avec la figure 2, le circuit 1 électrique reçoit en entrée au moins deux signaux électriques discrets, de préférence trois signaux électriques discrets x1, x2, x3, et comprend une source de tension +Vpp. Les valeurs des signaux électriques discrets conditionnent l'alimentation électrique du module 2 radio. En l'occurrence, dans le mode de réalisation des figures 2 et 3, les signaux électriques discrets doivent tous être égaux à 1 pour que le module 2 radio soit alimenté.

Bien entendu, on peut envisager un circuit électrique recevant en entrée un nombre plus élevé de signaux électriques discrets.

Le circuit électrique permet en fonctionnement normal d'alimenter l'alimentation électrique de l'équipement électrique 2 en fonction des valeurs des signaux électriques discrets.

On considère dans ce qui suit les valeurs logiques des signaux électriques discrets. En particulier, on considère qu'un signal électrique discret présente un état haut, c'est-à-dire une valeur logique '1' s'il traduit une condition selon laquelle l'équipement électrique peut être alimenté (par exemple, si l'aéronef a atterri) et qu'il est présente un état bas, c'est-à-dire une valeur logique '0' s'il traduit une condition selon laquelle l'équipement électrique ne doit pas être alimenté.

En relation avec la figure 2, on considère que les signaux électriques discrets doivent tous les trois êtres à l'état haut si l'équipement électrique 2 doit être alimenté.

Comme cela sera décrit dans ce qui suit, si un seul composant est utilisé pour tester les valeurs des signaux discrets ce dernier présente une probabilité de défaillance qui n'est pas négligeable de sorte que l'équipement électrique est alimenté alors qu'il ne devrait pas l'être.

Pour pallier ce problème, le circuit électrique présente plusieurs étages qui interagissent entre eux. A chaque étage, on peut prévenir une défaillance des composants qui présente un état incohérent avec les signaux discrets.

Ceci permet de diminuer la probabilité d'alimenter l'équipement électrique alors qu'il ne devrait pas l'être.

En effet, la probabilité de défaillance du circuit doit être de l'ordre de 10⁻⁹ par heure d'utilisation alors qu'un composant électronique seul a une probabilité de défaillance de l'ordre de 10⁻⁶ par heure d'utilisation.

Le circuit électrique 1 comprend une source de tension +Vpp qui alimente - en fonctionnement normal - l'équipement 2 électrique si tous les signaux électriques discrets indiquent que l'équipement doit l'être. Par exemple, l'aéronef a atterri, les signaux électriques discrets x1, x2, x3 sont tous à l'état haut ('1') si l'équipement 2 électrique doit être alimenté.

Le circuit électrique comprend N=3 unités de coupure U1, U2, U3 connectées en série l'une de l'autre entre la source de tension +Vpp et l'équipement 2 électrique.

Une dernière unité de coupure U_{N} avec N=3 est connectée à l'équipement 2 électrique.

En outre, chaque unité de coupure comporte deux voies, une voie supérieure Uis et une voie inférieure Uii. Chaque voie est assimilée à un interrupteur présentant un état ouvert ou fermé. On précise que les deux voies de chaque unité de coupure fonctionnent en même temps. De manière plus précise, on ne peut avoir pour une même unité de coupure, une voie ouverte et l'autre fermée.

Les voies supérieures U1s, U2s des unités de coupure en amont de la dernière unité de coupure U3 sont connectées entre elles de manière inversée. Il en va de même pour les voies inférieures U1i, U2i.

En revanche, ce n'est pas le cas entre l'avant dernière unité de coupure et la dernière unité de coupure.

La voie inférieure U3i de la dernière unité de coupure U3 est connectée à l'équipement électrique tandis que la voie supérieure U3s est connectée à une ligne de masse.

Dans ce qui suit on entend par « état ouvert » d'une unité de coupure, l'état de l'unité de coupure lorsque les interrupteurs de chaque voie sont à l'état haut (comme sur la figure 2).

Et on entend par « état bas » d'une unité de coupure, l'état de l'unité de coupure lorsque les interrupteurs de chaque voie sont à l'état bas (comme sur la figure 2).

On considère en outre qu'une unité de coupure passe de l'état ouvert à l'état fermé dès lors que le signal électrique de commande de l'unité de coupure présente un état « haut ».

En outre, en référence à la figure 2, l'équipement électrique est alimenté si les trois unités de coupure sont à l'état fermé. La tension se propage bien de la source de tension +Vpp à l'équipement électrique.

Chaque unité Uj, j=1, ..., N-1 de coupure en amont de la dernière unité de coupure est commandée par un signal électrique discret xj.

En l'occurrence, en référence à la figure 2, la première unité de coupure U1 est commandée par le signal électrique discret x1, la deuxième unité de coupure U2 est commandée par le signal électrique discret x2.

S'agissant de la dernière unité de coupure U3 (N=3), elle est commandée en fonction de l'état E1, E2 des unités de coupure en amont.

Si l'état d'une unité de coupure est fermé, alors on considère que l'état Ei (i=1, 2) de l'unité de coupure Ui est un état « haut » (valeur '1' logique).

Si l'état d'une unité de coupure est ouvert, alors on considère que l'état Ei (i=1, 2) de l'unité de coupure Ui est un état « bas » (valeur '0' logique).

En particulier, c'est un signal de commande, fonction logique de l'état des unités de coupure en amont de la dernière unité de coupure qui permet de commander la dernière unité de coupure.

Et de manière avantageuse, c'est une fonction 'ET' logique de l'état des unités U1, U2 en amont de la dernière unité U3 de coupure qui permet de générer le signal électrique s3 de commande de la dernière unité U3 de coupure.

Ainsi, pour que la dernière unité de coupure passe de l'état ouvert à l'état fermé il faut que les unités de coupure U1, U2 en amont soient à l'état fermé.

En outre, compte tenu que la voie U3s de la dernière unité U3 de coupure est connectée à une ligne de masse, dès lors que la dernière unité U3 de coupure est à l'état passant, en cas de divergence des états des unités de coupure en amont, un court-circuit est généré.

Ainsi, les unités de coupure permettent d'isoler la source de tension +Vpp de l'équipement électrique si tous les signaux électriques discrets ne sont pas l'état haut ('1') et si les états des unités de coupure en amont présentent un état divergent alors que la dernière unité de coupure est à l'état fermé. Par exemple, si l'unité de coupure U1 reste normalement dans un état ouvert, que l'unité de coupure U2 fonctionnant normalement passe à l'état fermée et qu'une défaillance de l'unité de coupure U3 provoque sa propre fermeture, alors la divergence des unités de coupures U1 et U2, associées à la fermeture intempestive de l'unité de coupure U3, provoqueront un court circuit, donc la destruction du fusible et donc la perte d'alimentation générale.

Afin de protéger les éléments du circuit électrique en cas de court-circuit, le circuit comprend un fusible FUSE pour isoler la source de tension (+Vpp) des éléments du circuit.

Ainsi, on a un court-circuit si l'une ou l'autre des unités de coupure en amont est à l'état ouvert alors que la dernière unité de coupure est à l'état fermé.

Par conséquent, le circuit électrique en fonctionnement normal sans défaillance présente notamment le fonctionnement suivant :
- si x1='1', x2='1', x3='1' alors les unités de coupure U1, U2, U3 sont à l'état passant (E1=E2='1'), l'équipement électrique 2 est alimenté.
- si x1='1', x2='0' alors l'unité de coupure U1 est à l'état passant (E1='1'), l'unité de coupure U2 est à l'état ouvert (E2='0'), l'unité de coupure U3 est à l'état ouvert (quel que soit l'état de x3), l'équipement électrique 2 n'est pas alimenté.

En outre, en cas de défaillance si l'unité de coupure U3 est à l'état fermé alors que les signaux électriques discrets indiquent que l'équipement électrique ne doit pas être alimenté (donc que par erreur S3='1') et que l'une ou l'autre des unités de coupure U1 ou U2 est à l'état fermé, l'autre étant à l'état ouvert, alors on a un court-circuit.

En relation avec la figure 3, un circuit électrique selon un mode de réalisation préféré est illustré.

Comme on peut le constater, sur cette figure, les unités de coupure sont constituées par des relais électromécaniques. Un tel composant permet dans la configuration du circuit décrite d'atteindre le niveau de sécurité exigé.

## Revendications

1. Circuit électrique adapté pour couper une alimentation électrique d'un équipement électrique (2), ledit circuit électrique recevant en entrée au moins deux signaux électriques discrets (x1, x2, x3), le circuit électrique comprenant :
- une source de tension (+Vpp)
- un nombre N>1 d'unités de coupure (U1, U2, U3) connectées en série l'une à l'autre entre la source de tension (+Vpp) et l'équipement électrique (2), où la dernière unité de coupure (U3) est connectée à l'équipement électrique, et chaque unité de coupure (U1, U2, U3) présentant un état ouvert ou fermé en fonction d'un signal électrique de commande (x1, x2, s3) ;
les unités de coupure (U1, U2) en amont de la dernière unité de coupure étant chacune commandée par un signal électrique discret (x1, x2) distinct, la dernière unité de coupure étant commandée en fonction de l'état (E1, E2) des unités de coupure en amont et d'un signal électrique discret (x3) différent de celui commandant les unités de coupure en amont, **caractérisé en ce que**
la dernière unité de coupure étant commandée pour isoler l'équipement électrique dès lors que les unités de coupure en amont de la dernière unité de coupure présentent un état divergent, et en outre la dernière unité de coupure est adaptée pour générer un court-circuit dès lors que ladite dernière unité de coupure est à l'état fermé et les unités de coupure en amont de la dernière unité de coupure présentent un état divergent.

2. Circuit électrique selon revendication 1, dans lequel la dernière unité de coupure est connectée à une ligne de masse pour générer le court-circuit.

3. Circuit électrique selon la revendication 2, comprenant au moins un fusible (FUSE) pour, en cas de court-circuit isoler la source de tension (+Vpp) des éléments dudit circuit électrique.

4. Circuit électrique selon l'une des revendications précédentes, dans lequel chaque unité de coupure comprend une voie supérieure et une voie inférieure, chaque voie comprenant un interrupteur présentant un état « ouvert » ou un état « fermé ».

5. Circuit électrique selon la revendication précédente, dans lequel les voies supérieures des unités de coupure en amont de la dernière unité de coupure sont connectées de manière inversée.

6. Circuit électrique selon l'une des revendications précédentes, dans lequel les unités de coupure sont des relais électromécaniques.

7. Circuit électrique selon l'une des revendications précédentes, dans lequel la dernière unité de coupure est commandée par une fonction ET logique de l'état des unités de coupure en amont et par le signal de commande de la dernière unité de coupure.

8. Système d'acquisition, de traitement et de communication de données avioniques comprenant un module radio (2) comprenant une alimentation électrique connectée à un circuit (1) électrique selon l'une des revendications précédentes.

## Patentansprüche

1. Elektrische Schaltungsanordnung, die zum Ausschalten einer elektrischen Versorgung (2) geeignet ist, wobei die elektrische Schaltungsanordnung zumindest zwei diskrete elektrische Steuersignale (x1, x2, x3) empfängt, wobei die elektrische Schaltungsanordnung Folgendes umfasst:
- eine Spannungsquelle (+Vpp)
- eine Anzahl N>1 Abschalteinheiten (U1, U2, U3), die aneinander zwischen der Spannungsquelle (+Vpp) und der elektrischen Ausrüstung (2) in Reihe geschaltet sind, wobei die letzte Abschalteinheit (U3) mit der elektrischen Ausrüstung verbunden ist und jede Abschalteinheit (U1, U2, U3) in Abhängigkeit von einem elektrischen Steuersignal (x1, x2, s3) einen offenen oder geschlossenen Zustand aufweist;
wobei die Abschalteinheiten (U1, U2) vor der letzten Abschalteinheit jeweils von einem separaten diskreten elektrischen Signal (x1, x2) gesteuert werden, wobei die letzte Abschalteinheit in Abhängigkeit vom Zustand (E1, E2) der vorgeschalteten Abschalteinheiten und einem diskreten elektrischen Signal (x3) gesteuert wird, das sich von dem der vorgeschalteten Abschalteinheiten unterscheidet,
**dadurch gekennzeichnet, dass** die letzte Abschalteinheit gesteuert wird, um die elektrische Ausrüstung abzutrennen, wenn die Abschalteinheiten vor der letzten Abschalteinheit einen divergierenden Zustand aufweisen, und ferner die letzte Abschalteinheit geeignet ist, um einen Kurzschluss zu erzeugen, wenn die letzte Abschalteinheit im geschlossenen Zustand ist und die Abschalteinheiten vor der letzten Abschalteinheit einen divergierenden Zustand aufweisen.

2. Elektrische Schaltungsanordnung nach Anspruch 1, wobei die letzte Abschalteinheit mit einer Masseleitung verbunden ist, um den Kurzschluss zu erzeugen.

3. Elektrische Schaltungsanordnung nach Anspruch 2, umfassend zumindest eine Sicherung (FUSE) zum Abtrennen der Spannungsquelle (+Vpp) von den Elementen der elektrischen Schaltungsanordnung im Falle eines Kurzschlusses.

4. Elektrische Schaltungsanordnung nach einem beliebigen der vorstehenden Ansprüche, wobei jede Abschalteinheit einen oberen Kanal und einen unteren Weg aufweist, wobei jeder Weg einen Schalter mit einem "offenen" oder "geschlossenen" Zustand aufweist.

5. Elektrische Schaltungsanordnung nach vorstehendem Anspruch, wobei die oberen Wege der Abschalteinheiten vor der letzten Abschalteinheit invertiert angeschlossen sind.

6. Elektrische Schaltungsanordnung nach einem beliebigen der vorstehenden Ansprüche, wobei die Abschalteinheiten elektromechanische Relais sind.

7. Elektrische Schaltungsanordnung nach einem beliebigen der vorstehenden Ansprüche, wobei die letzte Abschalteinheit durch eine logische UND-Funktion des Zustandes der vorgeschalteten Abschalteinheiten und durch das Steuersignal der letzten Abschalteinheit gesteuert wird.

8. Erfassungs-, Verarbeitungs- und Kommunikationssystem von Avionik-Daten umfassend ein Funkmodul (2), das eine Stromversorgung aufweist, die gemäß einer elektrischen Schaltungsanordnung (1) nach einem beliebigen der vorstehenden Ansprüche angeschlossen ist.

## Claims

1. An electric circuit adapted for cutting off a power supply of an electrical equipment (2), said electric circuit receiving as input at least two discrete electrical signals (x1, x2, x3), the electric circuit comprising :
- a voltage source (+Vpp);
- a number N>1 cut-off units (U1, U2, U3)connected in series to each other between the voltage source (+Vpp) and the electrical equipment (2), a last cut-off unit (U3) is connected to the electrical equipment and each cut-off unit (U1, U2, U3) having an open or closed state depending on an electrical control signal (x1, x2, s3);
the cut-off units (U1, U2) upstream of the last cut-off unit are each controlled by a distinct discrete electrical signal (x1,x2) the last cut-off unit being controlled as a function of the state (E1, E2) of the upstream cut-off units and a discrete electrical signal (x3) different from that controlling the upstream cut-off units,
**characterized in that**, the last cut-off unit being controlled to isolate the electrical equipment when the upstream cut-off units of the last cut-off unit have a divergent state, and furthermore the last cut-off unit is adapted to generate a short circuit once said last cut-off unit is in the closed state and the upstream cut-off units of the last cut-off unit have a divergent state.

2. The electric circuit according to claim 1, wherein the last cut-off unit is connected to a ground line to generate short circuit.

3. The electric circuit according to claim 2, comprising at least one fuse (FUSE) for isolating, in case of short-circuit, the voltage source (+Vpp) from the elements of said electric circuit.

4. The electric circuit according to any of the preceding claims, wherein each cut-off unit comprises an upper path and a lower path, each path comprising a switch having an "open" state or a "closed" state.

5. The electric circuit according to the preceding claim, wherein the upper paths of the cut-off units upstream of the last cut-off unit are connected reversely.

6. The electric circuit according to any of the preceding claims, wherein the cut-off units are electromechanical relays.

7. The electric circuit according to any of the preceding claims, wherein the last cut-off unit is controlled by a logic function AND of the state of the upstream cut-off units and by the control signal of the last cut-off unit.

8. An avionic data acquisition, processing and communication system comprising a radio module (2) comprising a power supply connected to an electric circuit (1), according to any of the preceding claims.
